# EUROPÄISCHE PATENTANMELDUNG

(11) **EP 3 154 220 A1**
(43) Veröffentlichungstag der Anmeldung: **12.04.2017**
(21) Anmeldenummer: 15189078.7
(22) Anmeldetag: 09.10.2015
(51) Int. Cl.: H04L 12/10, H04L 12/28, H04L 12/40, H05B 37/02, H04Q 1/02, H04Q 1/16, H04B 3/56, H04L 29/14, G08B 25/04, G08B 25/06, G08B 25/08, H04L 12/933

(54) **BUSKOPPLUNGSEINHEIT UND BUSSYSTEM MIT EINER BUSKOPPLUNGSEINHEIT**

(71) Anmelder: Siemens Schweiz AG, 8047 Zürich (CH)
(72) Erfinder: KÄSTLI, Urs, 8708 Männedorf (CH)
(74) Vertreter: Maier, Daniel Oliver

(57) **Zusammenfassung**

Die Erfindung ist eine Buskopplungseinheit (10) mit zwei Eingängen (12, 13) und zwei Ausgängen (14, 15), an welche jeweils Busleitungen (16, 17) eines zweiadrigen Busses anschließbar sind, und ein Bussystem (24) mit zumindest einer solchen Buskopplungseinheit (10), wobei jeweils einer der Eingänge (12, 13) mit einem der Ausgänge (14, 15) innerhalb der Buskopplungseinheit (10) mittels eines ersten bzw. zweiten Verbindungspfads (26, 28) elektrisch leitend verbindbar ist und wobei die beiden Verbindungspfade (26, 28) innerhalb der Buskopplungseinheit (10) mittels eines Brückenpfads (30) elektrisch leitend verbindbar sind.

## Beschreibung

In der Gebäudeautomation werden zur Verbindung dort vorgesehener Sensoren und Aktoren aufgrund der resultierenden Flexibilität mehr und mehr Bussysteme, zum Beispiel Feldbusse nach dem sogenannten KNX-Standard, eingesetzt. Bei Verwendung eines Bussystems kann bekanntlich jeder Sensor weitestgehend beliebig funktional mit jedem Aktor verbunden werden, so dass zum Beispiel mittels eines als Sensor fungierenden Schalters in einer ersten Konfiguration des Bussystems eine Aktivierung einer Deckenbeleuchtung und mittels des gleichen Schalters in einer zweiten Konfiguration des Bussystems eine Aktivierung eines anderen Verbrauchers des jeweiligen Gebäudes möglich ist. Demgegenüber sind bei einer herkömmlichen Elektroinstallation die Steuerfunktionen mit der Energieverteilung fest verbunden, so dass nachträgliche Schaltungs- und Funktionsänderungen schwierig umzusetzen sind. Auch übergeordnete Funktionen wie ein zentrales Schalten aller Beleuchtungselemente in einem Gebäude sind nur mit hohem Aufwand realisierbar.

Zum Anschluss von Sensoren und Aktoren an ein solches Bussystem sind jeweils Busanschaltungen vorgesehen, die entweder als separate Einheit oder als Bestandteil eines als Sensor oder Aktor fungierenden Gerätes zur Verfügung stehen. Mittels solcher Busanschaltungen ist eine Sicherheit gegen Kurzschlüsse, aber auch eine fortdauernde Betriebsbereitschaft im Falle zum Beispiel eines Drahtbruchs in einer Busleitung realisierbar.

Mit jedem an das Bussystem angeschlossenen Sensor oder Aktor und jeder dafür notwendigen Busanschaltung steigen sowohl der Strombedarf wie auch der effektive Widerstand des Bussystems. Der aufgrund des Widerstands resultierende Spannungsabfall über dem Bussystem ist proportional zum Quadrat der Anzahl der angeschlossenen Busanschaltungen. Die Verhältnisse werden noch ungünstiger, wenn Geräte mit besonders hohem Energiebedarf an das Bussystem angeschlossen werden. Dies begrenzt in der Praxis die mögliche Anzahl von mittels eines Bussystems vernetzbaren Sensoren und Aktoren.

Eine Aufgabe der vorliegenden Erfindung besteht demnach darin, eine Möglichkeit zu schaffen, mittels derer sich auf unproblematische Art und Weise und unter Erhalt der Sicherheit bei Kurzschluss sowie der Betriebsbereitschaft bei Drahtbruch oder dergleichen die Anzahl der an ein Bussystem anschließbaren Busanschaltungen erhöhen lässt.

Diese Aufgabe wird erfindungsgemäß mittels einer im Folgenden kurz als Buskoppler bezeichneten Buskopplungseinheit mit den Merkmalen des Anspruchs 1 sowie mittels eines Bussystems mit zumindest einem derartigen Buskoppler gelöst. Der Buskoppler weist Ein- und Ausgänge zur Kopplung zweier Segmente eines zweiadrigen Busses, also eines mit zwei Busleitungen gebildeten Busses, auf. Über die beiden Busleitungen sind gleichermaßen elektrische Energie wie auch Daten übertragbar und im Betrieb werden über die Busleitungen elektrische Energie und Daten zu den Busanschaltungen übertragen. Bei dem hier vorgeschlagenen Buskoppler ist vorgesehen, dass dieser einen ersten und einen zweiten Eingang sowie einen ersten und einen zweiten Ausgang mit jeweils einer Anschlussmöglichkeit von zwei Busleitungen, insgesamt also vier sogenannte Ports, umfasst. Der erste Eingang und der erste Ausgang sind innerhalb des Buskopplers (Buskoppler-intern) mittels eines ersten Verbindungspfads elektrisch leitend verbindbar. Ebenso sind der zweite Eingang und der zweite Ausgang Buskoppler-intern mittels eines zweiten Verbindungspfads elektrisch leitend verbindbar. Schließlich sind die beiden Verbindungspfade (erster und zweiter Verbindungspfad) innerhalb des Buskopplers selbst elektrisch leitend verbindbar. Zur Unterscheidung von den beiden Verbindungspfaden wird diese elektrisch leitende Verbindbarkeit als Brückenpfad bezeichnet. Die elektrisch leitende Verbindbarkeit ist zum Beispiel mittels entsprechender Schaltelemente gewährleistet, insbesondere mittels elektronisch ansteuerbarer Schaltelemente, insbesondere mittels elektronisch ansteuerbarer Schaltelemente, die aufgrund von im Bussystem übertragenen Daten ansteuerbar sind.

Die elektrisch leitende Verbindbarkeit der beiden Verbindungspfade des Buskopplers mittels des Brückenpfads erlaubt eine Weiterleitung von zum Beispiel über einen der Eingänge eingespeister elektrischer Energie und eingehender Daten über beide Ausgänge des Buskopplers. Jede unmittelbar an einen der beiden Ausgänge angeschlossene Busanschaltung wird dann mit der zugeführten elektrischen Energie gespeist. Wenn ein Bussegment in Form einer Schleife an den ersten und zweiten Ausgang des Buskopplers angeschlossen ist, ergibt sich entlang eines solchen Bussegments nur ein halb so großer Spannungsabfall wie bei einem linearen Bussegment mit derselben Anzahl von Busanschaltungen.

Bei einer Ausführungsform des Buskopplers umfasst dieser jeweils zumindest ein Schaltelement im ersten und/oder zweiten Verbindungspfad zwischen dem jeweiligen Eingang und der Anschlussstelle des Brückenpfads an den Verbindungspfad und/oder der Anschlussstelle des Brückenpfads und dem jeweiligen Ausgang. Mittels der Schaltelemente und des Brückenpfads ist jeder Ausgang mit jedem Eingang verbindbar und umgekehrt.

Bei einer weiteren Ausführungsform des Buskopplers umfasst dieser zwei gemeinsam schaltbare Schaltelemente im Brückenpfad. Mittels der gemeinsam schaltbaren Schaltelemente ist bei einer Aktivierung der Schaltelemente die elektrisch leitende Verbindung zwischen dem ersten und dem zweiten Verbindungspfad herstellbar.

Bei einer nochmals weiteren Ausführungsform des Buskopplers ist dieser so ausgeführt, dass die Schaltelemente, also die Schaltelemente in den Verbindungspfaden und/oder die gemeinsam schaltbaren Schaltelemente im Brückenpfad, mittels Busbefehlen ansteuerbar sind. Im Betrieb empfängt der Buskoppler solche Busbefehle über die jeweils an einen oder mehrere Ports angeschlossenen Busleitungen und leitet solche Busbefehle entsprechend der Schaltstellungen der Schaltelemente weiter. Bestimmte Busbefehle kann der Buskoppler auch selbst auswerten, nämlich solche Busbefehle, die zum Beispiel von einer Zentraleinheit zur Veränderung der Schaltstellungen einzelner oder mehrerer Schaltelemente eines Buskopplers auf den Bus gegeben werden. Auf diese Weise kann jeder Buskoppler von einer Zentrale angesteuert werden und so dessen Konfiguration beeinflusst werden.

Insgesamt ist die Erfindung auch ein Bussystem mit zumindest einem Buskoppler der hier und im Folgenden beschriebenen Art, zum Beispiel ein bei der Gebäudeautomatisierung verwendetes Bussystem.

Bei einem Verfahren zum Betrieb eines solchen Bussystems wird zur Durchführung von Tests oder zur Durchführung von Initialisierungsvorgängen automatisch im Bussystem der Brückenpfad jedes Buskopplers geöffnet. Das Öffnen der Brückenpfade erfolgt automatisch, also ohne Benutzereingriff, mittels und unter Kontrolle einer an das Bussystem angeschlossenen Zentraleinheit.

Beispiele für bei geöffneten Brückenpfaden durchführbare Tests sind eine Überwachung des Bussystems, eine Linienfehlerbehandlung oder eine Kurzschlussabtrennung. Bei einer Linienfehlerbehandlung erfolgt im Anschluss an den Test mittels einer von der Zentraleinheit veranlassten Schaltstellung der Schaltelemente eines oder mehrerer Buskoppler eine Überbrükkung eines Abschnitts des Bussystems mit einem Drahtbruch. Bei einer Kurzschlussabtrennung erfolgt im Anschluss an den Test mittels einer von der Zentraleinheit veranlassten Schaltstellung der Schaltelemente eines oder mehrerer Buskoppler ein Abtrennen eines kurzschlussbehafteten Abschnitts des Bussystems vom restlichen Bussystem. Bei geöffneten Brükkenpfaden ergibt sich während des Tests eine linienartige Bustopologie. Zum Test des Bussystems werden, insbesondere durch die Zentraleinheit, entlang der resultierenden Linientopologie charakteristische Werte ermittelt, wie zum Beispiel eine Durchgängigkeit zur Ermittlung von Linienfehlern oder Leitungswiderstände zur Ermittlung von eventuellen Kurzschlüssen.

Bei einer Variante des Verfahrens zum Betrieb des Bussystems erfolgt bei geöffneten Brückenpfaden als Initialisierungsvorgang eine automatische Adressvergabe. Dabei wird in grundsätzlich an sich bekannter Art und Weise einer an das Bussystem angeschlossenen Busanschaltung eine eindeutige Adresse zugewiesen, so dass die jeweilige Busanschaltung zumindest durch die Zentraleinheit ansprechbar und damit ein an die Busanschaltung angeschlossener Melder oder dergleichen ansteuerbar ist. Weil bei geöffneten Brückenpfaden eine linienartige Bustopologie resultiert, kann die automatische Adressvergabe entlang der Linientopologie erfolgen, zum Beispiel entsprechend einem Verfahren zur automatischen Adressvergabe gemäß der EP 1 688 900 B1 oder der EP 1 703 481 B1.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: einen Buskoppler,
- FIG 2: eine vereinfachte Darstellung des Buskopplers aus FIG 1,
- FIG 3: einen Buskoppler gemäß FIG 1 mit angeschlossenen Busanschaltungen,
- FIG 4: ein Bussystem mit Buskopplern gemäß FIG 1, FIG 2,
- FIG 5: gemäß einem Busprotokoll über das Bussystem übermittelbare Telegramme mit Kommunikations- und Test- oder Initialisierungsphasen und
- FIG 6: ein weiteres Bussystem mit solchen Buskopplern.

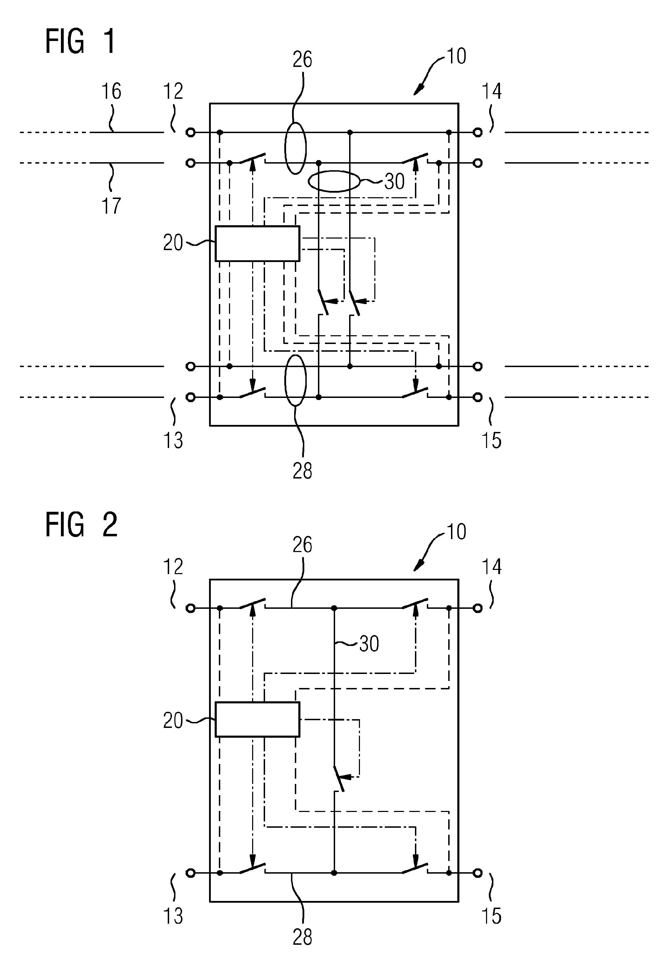

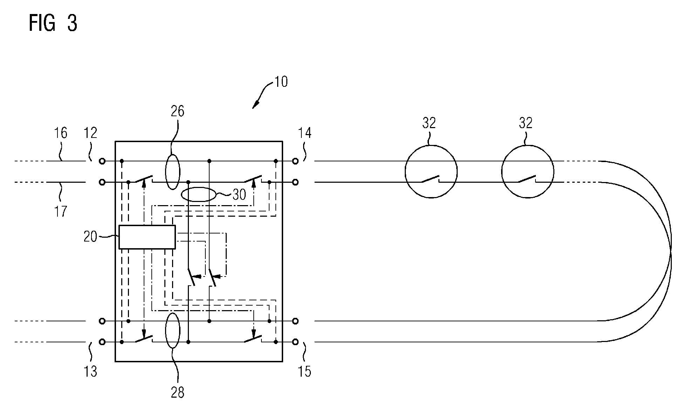

Die Darstellung in FIG 1 zeigt eine Ausführungsform eines Buskopplers 10 gemäß dem hier vorgestellten Ansatz. Der Buskoppler 10 umfasst vier Ports 12, 13, 14, 15, die im Folgenden zur Unterscheidung und im Interesse einer besseren Lesbarkeit der weiteren Beschreibung als Eingänge 12, 13 und Ausgänge 14, 15 bezeichnet werden, ohne damit eine bestimmte oder gar ausschließliche Richtung eines Energie- und/oder Datenflusses durch den Buskoppler 10 zum Ausdruck bringen zu wollen. An jeden Port 12-15 sind zwei Busleitungen 16, 17 eines zweiadrigen Bussystems 24 (FIG 3) anschließbar. Intern umfasst der Buskoppler 10 zumindest eine Logik 20 zur Auswertung von über das Bussystem 24 übertragenen Signalen.

Die beiden Eingänge 12, 13 - erster Eingang 12, zweiter Eingang 13 - sind Buskoppler-intern jeweils mit einem der Ausgänge 14, 15 - erster Ausgang 14, zweiter Ausgang 15 - verbindbar: Der erste Eingang 12 und der erste Ausgang 14 sind Buskoppler-intern mittels eines ersten Verbindungspfads 26 elektrisch leitend verbindbar; der zweite Eingang 13 und der zweite Ausgang 15 sind Buskoppler-intern mittels eines zweiten Verbindungspfads 28 elektrisch leitend verbindbar. Der erste Verbindungspfad 26 und der zweite Verbindungspfad 28 sind Buskoppler-intern mittels eines Brückenpfads 30 elektrisch leitend verbindbar. Die elektrisch leitende Verbindbarkeit wird mittels eines oder mehrerer elektronisch ansteuerbarer Schaltelemente - hier in Form einfacher Schalter gezeigt - gewährleistet. Diese sind mittels der Logik 20 aufgrund einer Auswertung von an einem der Ports 12-15 erhaltenen Bussignalen ansteuerbar.

FIG 2 zeigt eine schematisch vereinfachte Darstellung des Buskopplers 10 gemäß FIG 1. In der vereinfachten Darstellung ist jeder tatsächlich zweiadrige Pfad zwischen den Ports 12-15 in Form einer einzelnen Linie gezeigt.

Die Darstellung in FIG 3 ist hinsichtlich des Buskopplers 10 eine Wiederholung der Darstellung aus FIG 1. Zusätzlich gezeigt ist ein an die beiden Ausgänge 14, 15 angeschlossenes Bussegment mit (aus Platzgründen und ausdrücklich nur exemplarisch) zwei an die Busleitungen 16, 17 angeschlossenen Busanschaltungen 32. Am ersten Eingang 12 über die dort angeschlossenen Busleitungen 16, 17 eingehende Daten und dort eingespeiste elektrische Energie gelangen ersichtlich bei durchgeschaltetem ersten Verbindungspfad 26 über den ersten Ausgang 14 zu den Busanschaltungen 32, aber bei durchgeschaltetem Brückenpfad 30 und ebenfalls durchgeschaltetem zweiten Verbindungspfad 28 auch über den zweiten Ausgang 15 zu den Busanschaltungen 32. Im Falle eines Drahtbruchs oder dergleichen zwischen dem ersten Ausgang 14 und einer der Busanschaltungen 32 können die Busanschaltungen 32 so über den zweiten Ausgang 15 noch mit elektrischer Energie und den im Bussystem 24 übertragenen Daten versorgt werden.

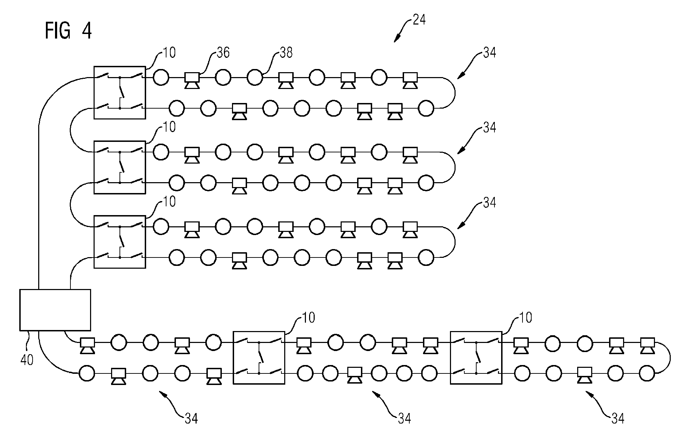

Die Darstellung in FIG 4 zeigt ein Bussystem 24 mit mehreren Buskopplern 10 der oben beschriebenen Art. Mittels der Buskoppler 10 ergibt sich eine Strukturierung des Bussystems 24, nämlich eine Unterteilung in einzelne Segmente 34 sowie eine Verbindbarkeit von jeweils zwei Segmenten 34. Die Versorgung der einzelnen Busanschaltungen 32, die hier nicht selbst, sondern nur schematisch vereinfacht in Form von in dem Bussystem 24 zusammengefassten und mittels jeweils einer Busanschaltung 32 an das Bussystem 24 angeschlossener Aktoren 36 und Meldern 38 gezeigt sind, erfolgt mittels einer Zentraleinheit (Controller) 40.

Jeder Melder 38 weist in an sich bekannter Art und Weise zumindest einen nicht gezeigten Sensor für eine Gefahrenkenngröße, wie zum Beispiel Rauch, Temperatur oder ein Brandgas, sowie eine ebenfalls nicht gezeigte Auswerteelektronik zur Erzeugung eines Signals bezüglich der jeweiligen Gefahrenkenngröße auf. Die gezeigten Aktoren 36 sind Beispiel für an das Bussystem 24 anschließbare Geräte allgemeiner Art. Beispiele für solche Aktoren 36 sind optische oder akustische Alarmgeber, Relais, Alarmanzeigen, Übermittlungsgeräte für eine Weiterleitung von Alarmen und so weiter.

Die Zentraleinheit 40 versorgt die Busanschaltungen 32 mit elektrischer Energie und steuert auch die Datenübertragung im Bussystem 24. Mittels der Zentraleinheit 40 sind - mittelbar über die Logik 20 des jeweiligen Buskopplers 10 - die Schaltelemente jedes Buskopplers 10 ansteuerbar. Durch eine entsprechende Ansteuerung der Schaltelemente in den Verbindungspfaden 26, 28 und dem Brückenpfad 30 ist jeder Eingang 12, 13 mit jedem Ausgang 14, 15 oder beiden Ausgängen 14, 15 und jeder Ausgang 14, 15 mit jedem Eingang 12, 13 oder beiden Eingängen 12, 13 verbindbar. Genauso sind Verbindungen zwischen einzelnen Ein- und Ausgängen 12-15 unterbrechbar.

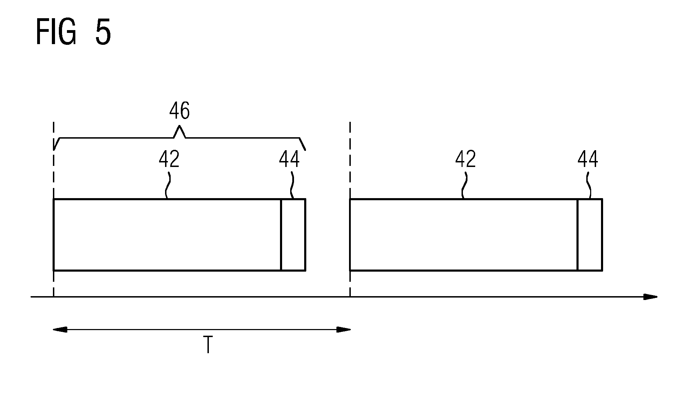

Für eine solche automatische Konfiguration der Buskoppler 10 (jedes einzelnen Buskopplers 10) in Form einer Beeinflussung der Schaltzustände der Schaltelemente sind Kommunikationsphasen 42 und Test- oder Initialisierungsphasen 44 vorgesehen, wie dies schematisch vereinfacht in der Darstellung in FIG 5 gezeigt ist. Die Kommunikationsphasen 42 und Test- oder Initialisierungsphasen 44 ergeben sich gemäß einem für eine Datenübertragung in dem Bussystem 24 vorgesehenen Busprotokoll. Ein nach dem Busprotokoll übermitteltes Telegramm 46 umfasst zumindest eine Kommunikationsphase 42 und gegebenenfalls auch eine Test- oder Initialisierungsphase 44. Deren Auswertung erfolgt mittels der internen Logik 20 des Buskopplers 10.

Eine Test- oder Initialisierungsphase 44 wird den an das Bussystem 24 angeschlossenen Buskopplern 10 und deren interner Logik 20 eindeutig durch die Zentraleinheit 40 signalisiert, zum Beispiel durch eine Signalflanke, ein Burst-Signal oder einen definierten Spannungspegel. Während einer Test- oder Initialisierungsphase 44, die nicht notwendig in jedem Buszyklus (FIG 5: Zykluszeit T) aktiv sein muss, werden in dem Bussystem 24 Tests oder Initialisierungsvorgänge abgewickelt. Dazu wird automatisch der Brückenpfad 30 jedes Buskopplers 10 geöffnet. Bei geöffneten Brückenpfaden 30 resultiert ein Bussystem 24 mit einer Linientopologie und im Rahmen eines während einer solchen Phase automatisch ablaufenden Tests werden zum Beispiel charakteristische Werte entlang der Linientopologie ermittelt. Alternativ erfolgt entlang der Linientopologie eine automatische Adressvergabe für die einzelnen Buskoppler 10.

Bei einer Betrachtung der im oberen Bereich der Darstellung in FIG 4 exemplarisch gezeigten drei Segmente 34 (Teilmaschen; Subloops) des Bussystems 24 ist erkennbar, dass aufgrund der Buskoppler 10 die Mehrzahl der von den Teilmaschen umfassten Aktoren 36 oder Meldern 38 direkter (im Sinne von näher) an die Zentraleinheit 40 angeschlossen sind, als dies ohne die Buskoppler 10 und mit einer sich dann ergebenden "großen Masche" der Fall wäre.

Jede Busanschaltung 32 eines in einer der Teilmaschen einem Buskoppler 10 an dessen erstem oder zweitem Ausgang 14, 15 nachfolgenden Aktors 36 oder Melders 38 wird - bei durchgeschaltetem ersten und zweiten Verbindungspfad 26, 28 sowie ebenfalls durchgeschaltetem Brückenpfad 30 - unmittelbar mit der von der Zentraleinheit 40 bereitgestellten Versorgungsspannung gespeist. Der Spannungsabfall über einer Busanschaltung 32 reduziert die Spannung an den ausgehend von den Buskopplern 10 "weiter hinten" liegenden Busanschaltungen 32. Weil jede einzelne Teilmasche beidseitig, nämlich über den ersten und zweiten Ausgang 14, 15 des jeweiligen Buskopplers 10, gespeist wird, betrifft diese Spannungsreduktion aber jeweils nur eine Hälfte der von der jeweiligen Teilmasche umfassten Busanschaltungen 32.

Im unteren Bereich der Darstellung in FIG 4 ist eine Situation gezeigt, bei der eine Teilmasche des Bussystems 24 mittels mehrerer Buskoppler 10 in einzelne Segmente 34 aufgeteilt ist. Im Falle einer Unterbrechung oder eines Kurzschlusses der Busleitungen 16, 17 in einem der beiden parallelen Zweige eines der Segmente 34 fällt dieser für die Weiterleitung der elektrischen Energie und der im Bussystem 24 übertragenen Daten aus. Die Energie- und Datenübertragung ist aber weiterhin durch den zu diesem Zweig parallelen Zweig des jeweiligen Segments 34 gewährleistet. Nur in diesem Zweig fließt der volle für die Versorgung der in der Teilmasche nachfolgenden Busanschaltung 32 benötigte Strom. In jedem nachfolgenden Segment 34 teilt sich dieser Strom wieder auf die beiden dort jeweils parallelen Zweige auf.

Die resultierende Vernetzung innerhalb des Bussystems 24 und die parallelen Zweige führen in jedem Segment 34 zu einem im Vergleich zu einem Bussystem 24 ohne solche Buskoppler 10 reduzierten Gesamtwiderstand der aufeinander folgenden Busanschaltungen 32.

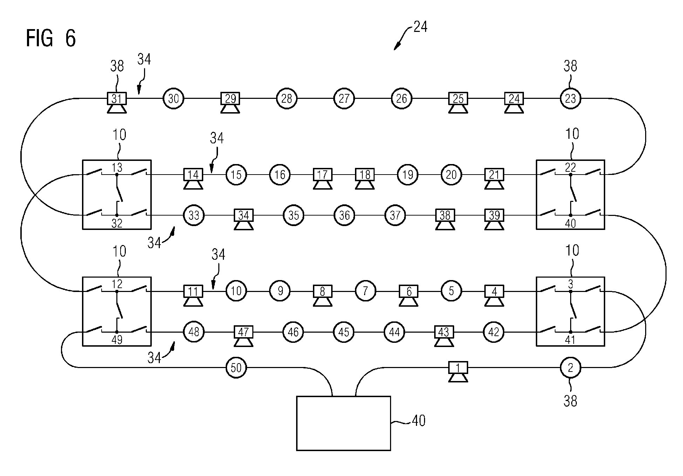

In der Darstellung in FIG 6 ist eine weitere Topologie eines Bussystems 24 mit Buskopplern 10 der hier vorgeschlagenen Art gezeigt. Die fortlaufenden natürlichen Zahlen bezeichnen die Adressen der einzelnen Einheiten im Bussystem 24. Für die Adressvergabe sind die Brückenpfade 30 der Buskoppler 10 geöffnet und der erste und der zweite Verbindungspfad 26, 28 geschlossen. Dann ergibt sich eine eindeutige Abfolge der Busanschaltungen 32 der in dem Bussystem 24 zusammengefassten Aktoren 36 und Melder 38. Beim laufenden Betrieb des Bussystems 24 und der damit jeweils realisierten Gebäudeautomatisierung werden die Brückenpfade 30 der Buskoppler 10 geschlossen, so dass - bei der hier gezeigten Situation - eine beidseitige Speisung sowie Versorgung mit den im Bussystem 24 übertragenen Daten aller fünf von dem Bussystem 24 umfassten Segmente 34 gegeben ist. Nachdem - wie hier gezeigt - jedes Segment 34 etwa ein Fünftel der von dem Bussystem 24 insgesamt umfassten Busanschaltungen 32 umfasst und die Länge eines jeden Segments 34 etwa ein Fünftel der Länge einer ohne Buskoppler 10 resultierenden "großen Masche" beträgt, ergibt sich in jedem Segment 34 ein im Vergleich zu einer einzelnen, großen Masche zwanzigfach geringerer Spannungsabfall. Etwaige zwischen der Zentraleinheit 40 und den Buskopplern 10 befindliche Busanschaltungen 32 reduzieren diesen Gewinn.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden eine Buskopplungseinheit (Buskoppler) 10 mit zwei Eingängen 12, 13 und zwei Ausgängen 14, 15, an welche jeweils Busleitungen 16, 17 eines zweiadrigen Busses anschließbar sind, und ein Bussystem 24 mit zumindest einer solchen Buskopplungseinheit 10, wobei jeweils einer der Eingänge 12, 13 mit einem der Ausgänge 14, 15 innerhalb der Buskopplungseinheit 10 mittels eines ersten bzw. zweiten Verbindungspfads 26, 28 elektrisch leitend verbindbar ist und wobei die beiden Verbindungspfade 26, 28 innerhalb der Buskopplungseinheit 10 mittels eines Brückenpfads 30 elektrisch leitend verbindbar sind.

### Bezugszeichenliste

- 10: Buskopplungseinheit, Buskoppler
- 12: Port, (erster) Eingang
- 13: Port, (zweiter) Eingang
- 14: Port, (erster) Ausgang
- 15: Port, (zweiter) Ausgang
- 16: Busleitung
- 17: Busleitung
- 20: Logik
- 22: (frei)
- 24: Bussystem
- 26: (erster) Verbindungspfad
- 28: (zweiter) Verbindungspfad
- 30: Brückenpfad
- 32: Busanschaltung
- 34: (Bus-)Segment
- 36: Aktor
- 38: Melder
- 40: Zentraleinheit
- 42: Kommunikationsphase
- 44: Test- oder Initialisierungsphase
- 46: Telegramm

## Patentansprüche

1. Buskoppler (10) mit Ein- und Ausgängen (12, 13, 14, 15), an welche jeweils Busleitungen (16, 17) eines zweiadrigen Busses anschließbar sind, wobei über die beiden Busleitungen (16, 17) gleichermaßen elektrische Energie wie auch Daten übertragbar sind, **dadurch gekennzeichnet,**
- **dass** der Buskoppler (10) einen ersten und einen zweiten Eingang (12, 13) sowie einen ersten und einen zweiten Ausgang (14, 15) mit jeweils einer Anschlussmöglichkeit von zwei Busleitungen (16, 17) umfasst,
- **dass** der erste Eingang (12) und der erste Ausgang (14) Buskoppler-intern mittels eines ersten Verbindungspfads (26) elektrisch leitend verbindbar sind,
- **dass** der zweite Eingang (13) und der zweite Ausgang (15) Buskoppler-intern mittels eines zweiten Verbindungspfads (28) elektrisch leitend verbindbar sind, und
- **dass** der erste Verbindungspfad (26) und der zweite Verbindungspfad (28) Buskoppler-intern mittels eines Brückenpfads (30) elektrisch leitend verbindbar sind.

2. Buskoppler (10) nach Anspruch 1, mit jeweils zumindest einem Schaltelement im ersten und/oder zweiten Verbindungspfad (26, 28) zwischen dem jeweiligen Eingang (12, 13) und der Anschlussstelle des Brückenpfads (30) und/oder der Anschlussstelle des Brückenpfads (30) und dem jeweiligen Ausgang (14, 15).

3. Buskoppler (10) nach Anspruch 1 oder 2, mit zwei gemeinsam schaltbaren Schaltelementen im Brückenpfad (30).

4. Buskoppler (10) nach Anspruch 2 oder 3, wobei die Schaltelemente mittels Busbefehlen ansteuerbar sind.

5. Bussystem (24) mit zumindest einem Buskoppler (10) nach einem der Ansprüche 1 bis 4.

6. Verfahren zum Betrieb eines Bussystems (24) nach Anspruch 5, wobei zur Durchführung von Tests oder Initialisierungsvorgängen automatisch im Bussystem (24) der Brückenpfad (30) jedes Buskopplers (10) geöffnet wird.

7. Verfahren nach Anspruch 6, wobei bei geöffneten Brückenpfaden (30) ein Bussystem (24) mit einer Linientopologie resultiert und zum Test des Bussystems (24) automatisch charakteristische Werte entlang der Linientopologie ermittelt werden.

8. Verfahren nach Anspruch 6 oder 7, wobei bei geöffneten Brückenpfaden (30) ein Bussystem (24) mit einer Linientopologie resultiert und eine automatische Adressvergabe entlang der Linientopologie erfolgt.
